(19) Europäisches Patentamt
European Patent Office
Office européen des brevets

(11) **EP 4 484 597 A1**

(12) **EUROPEAN PATENT APPLICATION**
published in accordance with Art. 153(4) EPC

(43) Date of publication:
01.01.2025 Bulletin 2025/01

(21) Application number: 22940317.5

(22) Date of filing: 08.11.2022

(51) International Patent Classification (IPC):
*C22C 38/00* (2006.01)  *B21C 37/08* (2006.01)
*C21D 8/02* (2006.01)  *C21D 9/08* (2006.01)
*C21D 9/46* (2006.01)  *C21D 9/50* (2006.01)
*C22C 38/38* (2006.01)  *C22C 38/58* (2006.01)

(52) Cooperative Patent Classification (CPC):
B21C 37/08; C21D 8/02; C21D 9/08; C21D 9/46;
C21D 9/50; C22C 38/00; C22C 38/38; C22C 38/58

(86) International application number:
PCT/JP2022/041580

(87) International publication number:
WO 2023/210046 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.04.2022 JP 2022073730

(71) Applicant: JFE Steel Corporation
Tokyo 100-0011 (JP)

(72) Inventors:
• MATSUMOTO, Akihide
Tokyo 100-0011 (JP)
• IDE, Shinsuke
Tokyo 100-0011 (JP)
• MATSUMOTO, Atsushi
Tokyo 100-0011 (JP)
• NAKAZAWA, Ryo
Tokyo 100-0011 (JP)

(74) Representative: Haseltine Lake Kempner LLP
One Portwall Square
Portwall Lane
Bristol BS1 6BH (GB)

(54) **ELECTRIC RESISTANCE WELDED STEEL PIPE AND METHOD FOR MANUFACTURING SAME**

(57) Provided is an electric resistance welded steel pipe or tube that has high strength and excellent workability and toughness and is suitable as a machine structural steel pipe or tube used in parts of automobiles, construction machinery, and industrial machinery. An electric resistance welded steel pipe or tube comprises a predetermined chemical composition, wherein a steel microstructure at a wall thickness center of a base metal portion has a volume ratio of martensite of 90 % or more, with a balance containing one or more selected from ferrite, bainite, pearlite, and austenite, an average crystal grain size of 10 μm or less, and a volume ratio of prior austenite with a grain size of 50 μm or more of 40 % or less.

*FIG. 1*

EP 4 484 597 A1

**Description**

TECHNICAL FIELD

The present disclosure relates to an electric resistance welded steel pipe or tube and a production method therefor.

BACKGROUND

In recent years, parts in automobiles, construction machinery, and industrial machinery are required to have high strength in order to improve fuel efficiency and downsize equipment. Machine structural steel pipes or tubes used in such parts are also required to have high workability as they are subjected to work such as bend forming, hydraulic bulge forming, and pipe or tube end flaring depending on the application. Furthermore, high low-temperature toughness is needed because automobiles, construction machinery, and industrial machinery may be used in cold regions.

However, there is a problem in that parts increased in strength decrease in workability and toughness and cannot be used as intended.

In order to solve this problem, for example, JP 2019-112705 A (PTL 1) proposes a seamless steel pipe or tube that has a microstructure with a prior austenite grain size of 9.0 or more in terms of crystal grain size number, a tensile strength of 700 MPa or more, and an elongation of 25 % or more.

WO 2020/075297 A1 (PTL 2) proposes an electric resistance welded steel pipe or tube for torsion beams having high bend formability, wherein an aspect ratio of prior austenite grains in tempered martensite is small and a tensile strength in a pipe or tube axial direction is 750 MPa to 980 MPa.

CITATION LIST

Patent Literature

PTL 1: JP 2019-112705 A
PTL 2: WO 2020/075297 A1

SUMMARY

(Technical Problem)

The steel pipes or tubes described in PTL 1 and PTL 2 ensure high toughness and high workability as a result of the average grain size and shape of prior austenite being controlled. However, these methods alone cannot suppress decreases in toughness and workability caused by the presence of local coarse grains.

Bending is often used when working pipes or tubes. Here, workability can be improved by suppressing fracture on the outside of the bend and buckling on the inside of the bend. This is, however, not taken into consideration in PTL 1 and PTL 2. Thus, further improvement is needed.

It could therefore be helpful to provide an electric resistance welded steel pipe or tube that has high strength and excellent workability and toughness and is suitable as a machine structural steel pipe or tube used in parts of automobiles, construction machinery, and industrial machinery, and a production method therefor.

In the present disclosure, the term "high strength" means that the yield stress is 650 MPa or more and the tensile strength is 750 MPa or more in the pipe or tube axial direction. Preferably, the yield stress is 700 MPa or more and the tensile strength is 800 MPa or more.

In the present disclosure, the term "high workability" or "excellent workability" means that the yield ratio (= (yield stress/tensile strength) × 100) in the pipe or tube axial direction is 93 % or less, the total elongation in the pipe or tube axial direction is 20 % or more, and the load P (N) at the time of cracking in a flattening test (JIS G 3441) satisfies the following formula (1). The yield ratio in the pipe or tube axial direction is preferably 90 % or less. The total elongation in the pipe or tube axial direction is preferably 25 % or more.

$$P \geq 1.5 \times TS \times t^2 \times L/D \qquad \cdots (1).$$

In the formula (1), TS is the tensile strength (MPa), D is the outer diameter (mm), t is the wall thickness (mm) of the steel pipe or tube, and L is the length (mm) in the pipe or tube axial direction.

In the present disclosure, the term "high toughness" or "excellent toughness" means that the Charpy impact value at -60 °C is 60 $J/cm^2$ or more. The Charpy impact value at -60 °C is preferably 70 $J/cm^2$ or more.

(Solution to Problem)

Upon careful examination, we found that, if part of prior austenite is coarse, martensite formed from such coarse prior austenite is coarse, as a result of which toughness and workability decrease.

In the case where the microstructure is coarse, the proportion of large-angle grain boundaries that serve as barriers against embrittlement fracture decreases and consequently toughness decreases. Even when the average grain size is small, if a certain proportion of coarse grains is present, such coarse grains act as initiation points of embrittlement fracture and consequently toughness decreases.

In view of this, we considered that uniformly refining prior austenite can suppress the formation of coarse martensite and obtain uniformly fine martensite, with it being possible to improve toughness and workability.

We also discovered that such uniformly fine martensite can achieve both high strength and low yield ratio by appropriately controlling tempering conditions and mobile dislocation density. We further discovered that such uniformly fine martensite increases uniform elongation and reduces variation in the wall thickness distribution during deformation, thus improving workability.

The present disclosure is based on these discoveries and further studies. We thus provide the following.

1. An electric resistance welded steel pipe or tube comprising a base metal portion and a weld portion, wherein a chemical composition contains (consists of), in mass%, C: 0.150 % or more and 0.500 % or less, Si: 0.05 % or more and 1.00 % or less, Mn: 0.10 % or more and 2.00 % or less, P: 0.050 % or less, S: 0.0200 % or less, Al: 0.005 % or more and 0.100 % or less, N: 0.0100 % or less, Cr: 0.10 % or more and 1.00 % or less, and B: 0.0002 % or more and 0.0050 % or less, with a balance consisting of Fe and inevitable impurities, and wherein a steel microstructure at a wall thickness center of the base metal portion has a volume ratio of martensite of 90 % or more, with a balance containing one or more selected from ferrite, bainite, pearlite, and austenite, an average crystal grain size of 10 μm or less, and a volume ratio of prior austenite with a grain size of 50 μm or more of 40 % or less.

2. The electric resistance welded steel pipe or tube according to 1., wherein the chemical composition further contains, in mass%, one or more selected from Cu: 1.00 % or less, Ni: 1.00 % or less, Mo: 1.00 % or less, Nb: 0.150 % or less, V: 0.150 % or less, Ti: 0.150 % or less, and Ca: 0.0100 % or less.

3. The electric resistance welded steel pipe or tube according to 1. or 2., wherein, in the chemical composition, in mass%, P: 0.002 % or more and 0.050 % or less, S: 0.0002 % or more and 0.0200 % or less, and N: 0.0010 % or more and 0.0100 % or less.

4. A production method for the electric resistance welded steel pipe or tube according to any one of 1. to 3., the production method comprising: a hot rolling process of heating a steel material to a heating temperature of 1100 °C or more and 1300 °C or less, and thereafter subjecting the steel material to hot rolling with a rough rolling end temperature of 850 °C or more and 1150 °C or less, a finish rolling end temperature of 750 °C or more and 900 °C or less, and a total rolling reduction ratio at 930 °C or less of 50 % or more; a cooling process of, after the hot rolling process, performing cooling with an average cooling rate of 5 °C/s or more and 30 °C/s or less at a sheet thickness center and a cooling stop temperature of 400 °C or more and 650 °C or less at a sheet thickness center; a coiling process of, after the cooling process, performing coiling at 400 °C or more and 650 °C or less to obtain a hot-rolled steel sheet; a pipe or tube formation process of forming the hot-rolled steel sheet into a cylinder by cold roll forming and performing electric resistance welding to obtain a steel pipe or tube material; a sizing process of reducing the steel pipe or tube material in diameter so as to reduce a circumferential length thereof by 3.0 % or less; a quenching process of, after the sizing process, heating the steel pipe or tube material in a temperature range of 850 °C or more and 1050 °C or less for 100 s or more and 1000 s or less, and thereafter cooling the steel pipe or tube material to 100 °C or less with an average cooling rate of 40 °C/s or more at least from 800 °C to 400 °C at a wall thickness center; and a tempering process of, after the quenching process, heating the steel pipe or tube material in a temperature range of 450 °C or more and 600 °C or less for more than 70 s.

5. The production method according to 4., wherein a heating time in the temperature range of 450 °C or more and 600 °C or less in the tempering process is 100 s or more and 1000 s or less.

(Advantageous Effect)

It is thus possible to provide an electric resistance welded steel pipe or tube that has high strength and excellent workability and toughness and is suitable as a machine structural steel pipe or tube used in parts of automobiles, construction machinery, and industrial machinery, and a production method therefor.

BRIEF DESCRIPTION OF THE DRAWINGS

In the accompanying drawings:

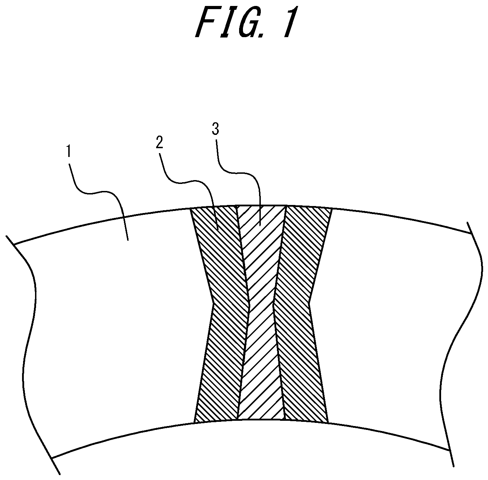

FIG. 1 is a schematic diagram of a section of an electric resistance weld portion of an electric resistance welded steel pipe or tube in the pipe or tube circumferential direction (i.e. a section perpendicular to the pipe or tube axial direction).

DETAILED DESCRIPTION

FIG. 1 illustrates a section of an electric resistance welded steel pipe or tube according to the present disclosure perpendicular to the pipe or tube axial direction. The electric resistance welded steel pipe or tube according to the present disclosure comprises a base metal portion 1 and a weld portion (the below-described heat-affected zone 2 and bond portion 3). The base metal portion 1 in the electric resistance welded steel pipe or tube according to the present disclosure contains, in mass%, C: 0.150 % or more and 0.500 % or less, Si: 0.05 % or more and 1.00 % or less, Mn: 0.10 % or more and 2.00 % or less, P: 0.050 % or less, S: 0.0200 % or less, Al: 0.005 % or more and 0.100 % or less, N: 0.0100 % or less, Cr: 0.10 % or more and 1.00 % or less, and B: 0.0002 % or more and 0.0050 % or less, with the balance consisting of Fe and inevitable impurities. The steel microstructure at the wall thickness center of the base metal portion 1 has the volume ratio of martensite of 90 % or more, with the balance containing one or more selected from ferrite, bainite, pearlite, and austenite, the average crystal grain size of 10 $\mu$m or less, and the volume ratio of prior austenite with a grain size of 50 $\mu$m or more of 40 % or less.

The electric resistance welded steel pipe or tube and the production method therefor according to the present disclosure will be described below.

First, the chemical composition of the base metal portion 1 in the electric resistance welded steel pipe or tube according to the present disclosure will be described. In this specification, "%" representing the chemical composition is "mass%" unless otherwise noted.

(C: 0.150 % or more and 0.500 % or less)

C is an element that increases the strength of the steel through solid solution strengthening. C also enhances hardenability to contribute to the formation of martensite. In order to achieve these effects, the C content is 0.150 % or more. If the C content is more than 0.500 %, strength increases excessively and workability and toughness decrease, and also weldability degrades. The C content is therefore 0.150 % or more and 0.500 % or less. The C content is preferably 0.180 % or more and more preferably 0.200 % or more. The C content is preferably 0.480 % or less and more preferably 0.460 % or less.

(Si: 0.05 % or more and 1.00 % or less)

Si is an element that increases the strength of the steel through solid solution strengthening. Si also enhances hardenability to contribute to the formation of martensite. In order to achieve these effects, the Si content is 0.05 % or more. If the Si content is more than 1.00 %, strength increases excessively and workability and toughness decrease. Moreover, oxides tend to form in the electric resistance weld portion, causing degradation in weld portion properties. The Si content is therefore 0.05 % or more and 1.00 % or less. The Si content is preferably 0.08 % or more and more preferably 0.10 % or more. The Si content is preferably 0.80 % or less and more preferably 0.50 % or less.

(Mn: 0.10 % or more and 2.00 % or less)

Mn is an element that increases the strength of the steel through solid solution strengthening. Mn also enhances hardenability to contribute to the formation of martensite. In order to achieve these effects, the Mn content needs to be 0.10 % or more. If the Mn content is more than 2.00 %, strength increases excessively and workability and toughness decrease. Moreover, oxides tend to form in the electric resistance weld portion, causing degradation in weld portion properties. The Mn content is therefore 0.10 % or more and 2.00 % or less. The Mn content is preferably 0.20 % or more and more preferably 0.30 % or more. The Mn content is preferably 1.50 % or less and more preferably 1.20 % or less.

(P: 0.050 % or less)

P segregates at grain boundaries and causes inhomogeneity in the material. Accordingly, it is preferable to reduce P as an inevitable impurity as much as possible, but a P content of up to 0.050 % is acceptable. Hence, the P content is 0.050 % or less in the present disclosure. The P content is preferably 0.020 % or less and more preferably 0.010 % or less. Although no lower limit is placed on the P content, the P content is preferably 0.002 % or more because excessive reduction leads to high refining costs.

(S: 0.0200 % or less)

S is usually present in steel as MnS. MnS is stretched thinly in the hot rolling process, which adversely affects ductility and toughness. Accordingly, it is preferable to reduce S as an inevitable impurity as much as possible in the present disclosure, but a S content of up to 0.0200 % is acceptable. The S content is therefore 0.0200 % or less. The S content is preferably 0.0100 % or less and more preferably 0.0080 % or less. Although no lower limit is placed on the S content, the S content is preferably 0.0002 % or more because excessive reduction leads to high refining costs.

(Al: 0.005 % or more and 0.100 % or less)

Al is an element that acts as a strong deoxidizer. In order to achieve this effect, the Al content needs to be 0.005 % or more. If the Al content is more than 0.100 %, weldability deteriorates, and also alumina-based inclusions increase and surface characteristics deteriorate. The toughness of the weld portion decreases, too. The Al content is therefore 0.100 % or less. The Al content is preferably 0.010 % or more and more preferably 0.015 % or more. The Al content is preferably 0.080 % or less and more preferably 0.070 % or less.

(N: 0.0100 % or less)

N is an inevitable impurity, and is an element that firmly locks dislocation motion and thus decreases ductility and toughness. It is desirable to reduce N as an impurity as much as possible in the base metal portion 1 according to the present disclosure, but a N content of up to 0.0100 % is acceptable. The N content is therefore 0.0100 % or less. The N content is preferably 0.0080 % or less. Although no lower limit is placed on the N content, the N content is preferably 0.0010 % or more because excessive reduction leads to high refining costs.

(Cr: 0.10 % or more and 1.00 % or less)

Cr is an element that enhances hardenability to contribute to the formation of martensite and increases the strength of the steel. In order to achieve these effects, the Cr content needs to be 0.10 % or more. If the Cr content is more than 1.00 %, strength increases excessively and workability and toughness decrease. Moreover, oxides tend to form in the electric resistance weld portion, causing degradation in weld portion properties. The Cr content is therefore 0.10 % or more and 1.00 % or less. The Cr content is preferably 0.15 % or more and more preferably 0.20 % or more. The Cr content is preferably 0.80 % or less and more preferably 0.60 % or less.

(B: 0.0002 % or more and 0.0050 % or less)

B is an element that enhances hardenability to contribute to the formation of martensite and increases the strength of the steel. In order to achieve these effects, the B content needs to be 0.0002 % or more. If the B content is more than 0.0050 %, strength increases excessively and workability and toughness decrease. The B content is therefore 0.0002 % or more and 0.0050 % or less. The B content is preferably 0.0003 % or more and more preferably 0.0005 % or more. The B content is preferably 0.0040 % or less and more preferably 0.0030 % or less.

The balance consists of Fe and inevitable impurities. The inevitable impurities may contain O in an amount of 0.0050 % or less. In the present disclosure, O refers to total oxygen including O as oxide.

These are the basic components in the chemical composition of the electric resistance welded steel pipe or tube according to the present disclosure.

The chemical composition may optionally further contain one or more selected from Cu: 1.00 % or less, Ni: 1.00 % or less, Mo: 1.00 % or less, Nb: 0.150 % or less, V: 0.150 % or less, Ti: 0.150 % or less, and Ca: 0.0100 % or less.

(Cu: 1.00 % or less)

Cu is an element that increases the strength of the steel through solid solution strengthening, and may be optionally added. In order to achieve this effect, in the case of adding Cu, the Cu content is preferably 0.01 % or more. If the Cu content is more than 1.00 %, toughness may decrease and weldability may deteriorate. Accordingly, in the case of adding Cu, the Cu content is preferably 1.00 % or less. The Cu content is more preferably 0.05 % or more and further preferably 0.10 % or more. The Cu content is more preferably 0.70 % or less and further preferably 0.50 % or less.

(Ni: 1.00 % or less)

Ni is an element that increases the strength of the steel through solid solution strengthening, and may be optionally added. In order to achieve this effect, in the case of adding Ni, the Ni content is preferably 0.01 % or more. If the Ni content is more than 1.00 %, toughness and workability may decrease and weldability may deteriorate. Accordingly, in the case of adding Ni, the Ni content is preferably 1.00 % or less. The Ni content is more preferably 0.05 % or more and further preferably 0.10 % or more. The Ni content is more preferably 0.70 % or less and further preferably 0.50 % or less.

(Mo: 1.00 % or less)

Mo is an element that enhances the hardenability of the steel and increases the strength of the steel, and may be optionally added. In order to achieve this effect, in the case of adding Mo, the Mo content is preferably 0.01 % or more. If the Mo content is more than 1.00 %, toughness and workability may decrease and weldability may deteriorate. Accordingly, in the case of adding Mo, the Mo content is preferably 1.00 % or less. The Mo content is more preferably 0.05 % or more and further preferably 0.10 % or more. The Mo content is more preferably 0.70 % or less and further preferably 0.50 % or less.

(Nb: 0.150 % or less)

Nb is an element that forms fine carbides and nitrides in the steel to contribute to improving the strength of the steel and also suppresses coarsening of austenite during hot rolling to contribute to refining the microstructure, and may be optionally added. In order to achieve these effects, in the case of adding Nb, the Nb content is preferably 0.002 % or more. If the Nb content is more than 0.150 %, toughness and workability decrease. Accordingly, in the case of adding Nb, the Nb content is preferably 0.150 % or less. The Nb content is more preferably 0.005 % or more and further preferably 0.010 % or more. The Nb content is more preferably 0.100 % or less and further preferably 0.080 % or less.

(V: 0.150 % or less)

V is an element that forms fine carbides and nitrides in the steel to contribute to improving the strength of the steel, and may be optionally added. In order to achieve this effect, in the case of adding V, the V content is preferably 0.002 % or more. If the V content is more than 0.150 %, toughness and workability decrease. Accordingly, in the case of adding V, the V content is preferably 0.150 % or less. The V content is more preferably 0.005 % or more and further preferably 0.010 % or more. The V content is more preferably 0.100 % or less and further preferably 0.080 % or less.

(Ti: 0.150 % or less)

Ti is an element that forms fine carbides and nitrides in the steel to contribute to improving the strength of the steel and also suppresses coarsening of austenite during hot rolling to contribute to refining the microstructure, and may be optionally added. In addition, since Ti has high affinity with N, Ti renders N in the steel harmless as nitride and thus contributes to improving the toughness of the steel. In order to achieve these effects, in the case of adding Ti, the Ti content is preferably 0.002 % or more. If the Ti content is more than 0.150 %, the yield ratio increases and toughness decreases. The Ti content is therefore preferably 0.150 % or less. The Ti content is more preferably 0.005 % or more and further preferably 0.008 % or more. The Ti content is more preferably 0.130 % or less and further preferably 0.110 % or less.

(Ca: 0.0100 % or less)

Ca is an element that spheroidizes sulfides such as MnS that are stretched thinly in the hot rolling process and thus contributes to improving the toughness of the steel, and may be optionally added. In order to achieve this effect, in the case of adding Ca, the Ca content is preferably 0.0005 % or more. If the Ca content is more than 0.0100 %, Ca oxide clusters are formed in the steel and toughness deteriorates. Accordingly, in the case of adding Ca, the Ca content is preferably 0.0100 % or less. The Ca content is more preferably 0.0008 % or more and further preferably 0.0010 % or more. The Ca content is more preferably 0.0080 % or less and further preferably 0.0060 % or less.

Next, the steel microstructure of the electric resistance welded steel pipe or tube according to the present disclosure will be described.

It is necessary that, in the steel microstructure at the wall thickness center of the base metal portion 1 in the electric resistance welded steel pipe or tube according to the present disclosure, the volume ratio of martensite is 90 % or more, with the balance containing one or more selected from ferrite, bainite, pearlite, and austenite, the average crystal grain size is 10 $\mu$m or less, and the volume ratio of prior austenite with a grain size of 50 $\mu$m or more is 40 % or less.

(Volume ratio of martensite: 90 % or more)

Martensite is a hard microstructure, and martensite of 90 % or more in volume ratio is needed in order to achieve the strength required in the present disclosure. The volume ratio of martensite is preferably 93 % or more and more preferably 95 % or more. From the viewpoint of workability, the volume ratio of martensite is preferably 99 % or less and more preferably 98 % or less.

(Balance: one or more selected from ferrite, bainite, pearlite, and austenite)

The balance at the wall thickness center of the base metal portion 1 in the electric resistance welded steel pipe or tube is one or more selected from ferrite, bainite, pearlite, and austenite. Each of these microstructures has a different strength from that of martensite and, when mixed with martensite, can reduce the yield ratio and increase total elongation. Meanwhile, since fracture tends to occur at the interface between each of these microstructures and martensite due to stress concentration caused by the difference in strength, toughness decreases if these microstructures increase. Therefore, the total volume ratio of these microstructures is 10 % or less, preferably 7 % or less, and more preferably 5 % or less, relative to the entire microstructure in the same observation field at the position. Due to difficulty in completely suppressing the formation of these microstructures in the quenching process, and in order to ensure workability, a lower limit of about 1 % is allowed.

The electric resistance welded steel pipe or tube according to the present disclosure suffices to have the above-described steel microstructure at least in the range of ±0.20 mm from the wall thickness center (i.e. thickness position of 1/2 of the wall thickness) of the base metal portion 1 in the wall thickness direction. If the steel microstructure exists in this way, the steel microstructure within the scope of the present disclosure can be obtained at the other positions in the wall thickness direction of the base metal portion 1, so that the effects according to the present disclosure can be equally achieved. This is because the cooling rate in the quenching process is the lowest at the wall thickness center. Thus, in the present disclosure, the "steel microstructure at the wall thickness center" means a steel microstructure of a certain area (preferably 0.10 mm$^2$ or more) that exists in the range of ±0.20 mm from the wall thickness center in the wall thickness direction.

The steel microstructure is observed in the following manner. First, a test piece for microstructure observation is collected so that the observation plane will be a section perpendicular to the pipe or tube longitudinal direction of the base metal portion 1 and at the wall thickness center, and polished and then etched with nital. The microstructure of the test piece is then observed and photographed using an optical microscope (magnification: 1000 times) and/or a scanning electron microscope (SEM) (magnification: 1000 times). From the optical microscope image and/or SEM image thus obtained, the area ratio of each of martensite and the balance (ferrite, pearlite, bainite, austenite) is determined. The area ratio of each microstructure is calculated as the average value of the respective values obtained as a result of observation for five or more observation fields. In the present disclosure, the area ratio of each microstructure obtained as a result of this microstructure observation is taken to be the volume ratio of the microstructure.

Herein, ferrite is a product of diffusion transformation, and exhibits a nearly recovered microstructure with low dislocation density. Ferrite includes polygonal ferrite and pseudo-polygonal ferrite.

Bainite is a multi-phase microstructure of lath-like ferrite and cementite with high dislocation density.

Pearlite is a Eutectoid microstructure of iron and iron carbide (ferrite + cementite), and exhibits a lamellar microstructure in which linear ferrite and cementite are arranged alternately.

Martensite is a lath-like low-temperature transformed microstructure with extremely high dislocation density. Martensite is brighter in contrast than ferrite and bainite in SEM images.

It is difficult to distinguish martensite from austenite in optical microscope images and SEM images. Hence, the area ratio of microstructure observed as martensite or austenite in the obtained SEM image is calculated, and the volume ratio of austenite measured by the following method is subtracted from the calculated area ratio to obtain the volume ratio of martensite.

The volume ratio of austenite is measured by X-ray diffraction using a test piece prepared in the same manner as the foregoing test piece. The volume ratio is calculated from the integrated intensities of the (200), (220), and (311) planes of fcc iron and the (200) and (211) planes of bcc iron obtained by such X-ray diffraction.

(Average crystal grain size: 10 μm or less)

If the average crystal grain size of the crystal grains in the steel microstructure at the wall thickness center of the base metal portion 1 is more than 10 μm, the total area of the crystal grain boundaries that block crack propagation is small, so that the desired toughness cannot be achieved. The average crystal grain size of the crystal grains in the base metal portion 1 according to the present disclosure is therefore 10 μm or less. The average crystal grain size of the crystal grains is preferably 8.0 μm or less and more preferably 6.0 μm or less. If the average crystal grain size is excessively small, workability decreases. The average crystal grain size is therefore preferably 3.0 $\mu$m or more.

In the present disclosure, the "average crystal grain size" is the average equivalent circle diameter of the crystal grains that are defined as regions surrounded by boundaries with an orientation difference between adjacent crystals of 15° or more. The "equivalent circular diameter (crystal grain size)" is the diameter of a circle with the same area as the corresponding crystal grain.

The average crystal grain size is measured in the following manner. First, a section of the base metal portion 1 parallel to both the pipe or tube longitudinal direction and the wall thickness direction is mirror-polished. A histogram of grain size distribution (a graph in which the horizontal axis represents grain size and the vertical axis represents the existence ratio at each grain size) at the wall thickness center is calculated using the SEM/EBSD method, and the arithmetic average of the grain sizes is calculated and taken to be the average crystal grain size. The measurement conditions are an acceleration voltage of 15 kV, a measurement region of 500 $\mu$m $\times$ 500 $\mu$m, and a measurement step size (measurement resolution) of 0.5 $\mu$m. In the crystal grain size analysis, crystal grains of less than 2.0 $\mu$m in grain size are excluded as measurement noise. The average crystal grain size is measured for five or more observation fields, and the average value of the respective values obtained for the observation fields is calculated.

(Volume ratio of prior austenite with grain size of 50 $\mu$m or more: 40 % or less)

If the volume ratio of prior austenite with a grain size of 50 $\mu$m or more (hereafter also referred to as "coarse prior austenite") among the prior austenite in the steel microstructure at the wall thickness center of the base metal portion 1 is more than 40 % and the proportion of coarse grains is high, cracks easily propagate through the coarse grains, and thus the desired toughness cannot be achieved. In addition, since strain concentrates in the coarse grains during work and fracture occurs early, the desired workability cannot be achieved. The volume ratio of coarse prior austenite in the base metal portion 1 according to the present disclosure is therefore 40 % or less. The volume ratio of coarse prior austenite is preferably 35 % or less and more preferably 30 % or less.

The volume ratio of coarse prior austenite is measured in the following manner. First, a section of the base metal portion 1 parallel to both the pipe or tube longitudinal direction and the wall thickness direction is polished and then etched with a saturated picric acid solution to reveal the prior austenite grain boundaries. The microstructure at the wall thickness center is photographed using an optical microscope (magnification: 400 times) for five or more observation fields, and a histogram of prior austenite grain size distribution is calculated in each observation field. The area ratio of prior austenite with an equivalent circular diameter of 50 $\mu$m or more is calculated and taken to be the volume ratio of prior austenite with a grain size of 50 $\mu$m or more.

Instead of etching with the saturated picric acid solution, the SEM/EBSD method may be used to draw the boundaries with an orientation difference of 20° or more and 50° or less as prior austenite grain boundaries, which can be used to calculate a histogram of prior austenite grain size distribution.

Such a histogram of prior austenite grain size distribution can be obtained by calculating the area of each prior austenite grain using image processing software (for example, ImageJ 1.52p).

The electric resistance welded steel pipe or tube according to the present disclosure is composed of the base metal portion 1 and the weld portion, and the chemical composition and steel microstructure of the weld portion in the electric resistance welded steel pipe or tube are the same as those of the base metal portion 1.

Next, a production method for an electric resistance welded steel pipe or tube in one embodiment of the present disclosure will be described.

For example, a production method for an electric resistance welded steel pipe or tube according to the present disclosure comprises: a hot rolling process of heating a steel material having the above-described chemical composition to a heating temperature of 1100 °C or more and 1300 °C or less, and thereafter subjecting the steel material to hot rolling with a rough rolling end temperature of 850 °C or more and 1150 °C or less, a finish rolling end temperature of 750 °C or more and 900 °C or less, and a total rolling reduction ratio at 930 °C or less of 50 % or more to obtain a hot-rolled sheet; a cooling process of, after the hot rolling process, cooling the hot-rolled sheet with an average cooling rate of 5 °C/s or more and 30 °C/s or less and a cooling stop temperature of 400 °C or more and 650 °C or less at the sheet thickness center of the hot-rolled sheet; a coiling process of, after the cooling process, coiling the hot-rolled sheet at 400 °C or more and 650 °C or less to obtain a hot-rolled steel sheet; a pipe or tube formation process of forming the hot-rolled steel sheet into a cylinder by cold roll forming and performing electric resistance welding to obtain a steel pipe or tube material; a sizing process of, after the pipe or tube formation process, reducing the steel pipe or tube material in diameter so as to reduce the circumferential length thereof by 3.0 % or less; a quenching process of, after the sizing process, heating the steel pipe or tube material at a temperature of 850 °C or more and 1050 °C or less for 100 s or more and 1000 s or less, and thereafter cooling the steel pipe or tube material to 100 °C or less with an average cooling rate of 40 °C/s or more at least from 800 °C to 400 °C at the wall thickness center; and a tempering process of, after the quenching process, heating the steel pipe or tube material at a temperature of 450 °C or more and 600 °C or less for more than 70 s.

Herein, the "hot-rolled steel sheet" includes a hot-rolled sheet and a hot-rolled steel strip.

In the following description of the production method, the temperature expressed in "°C" is the surface temperature of each of the steel material, steel sheet (hot-rolled sheet), steel pipe or tube material, and steel pipe or tube, unless otherwise noted. The surface temperature can be measured using a radiation thermometer, for example. The temperature at the sheet thickness center of the steel sheet, the wall thickness center of the steel pipe or tube, or the like can be measured, for example, by calculating the temperature distribution in the section of the steel sheet, the steel pipe or tube, or the like by thermal analysis and correcting the result using the surface temperature of the steel sheet, the steel pipe or tube, or the like.

In the present disclosure, the method of preparing the steel material (steel slab) by steelmaking is not limited, and any of the known steelmaking methods such as converter, electric furnace, and vacuum melting furnace are applicable. The casting method is not limited, and the steel material is produced in the desired dimensions by a known casting method such as continuous casting. Ingot casting and blooming may be used instead of continuous casting. The molten steel may be further subjected to secondary refining such as ladle refining.

[Hot rolling process]

(Heating temperature: 1100 °C or more and 1300 °C or less)

If the heating temperature is less than 1100 °C, the deformation resistance of the rolled material increases, making rolling difficult. If the heating temperature is more than 1300 °C, the austenite grains coarsen and fine austenite grains cannot be obtained in the subsequent rolling (rough rolling, finish rolling), resulting in coarsening of the microstructure of the hot-rolled steel sheet. Consequently, the number of austenite nucleation sites during heating in the quenching process decreases, so that austenite (prior austenite in the electric resistance welded steel pipe or tube) formed in the quenching process coarsens. This makes it impossible to achieve the desired average crystal grain size and volume ratio of coarse prior austenite in the steel microstructure of the electric resistance welded steel pipe or tube according to the present disclosure. The heating temperature is more preferably 1120 °C or more. The heating temperature is more preferably 1280 °C or less.

The production method according to the present disclosure may use not only a conventional method of, after producing a steel slab (slab), cooling the slab to room temperature and then reheating the slab, but also an energy-saving process of hot direct rolling in which the warm slab is charged into the heating furnace without being cooled to room temperature or the slab is subjected to a short period of heat retention and then immediately rolled.

(Rough rolling end temperature: 850 °C or more and 1150 °C or less)

If the rough rolling end temperature is less than 850 °C, the surface temperature of the steel sheet falls to or below the ferrite transformation start temperature during the subsequent finish rolling and coarse ferrite forms, causing excessive formation of coarse prior austenite in the subsequent quenching process. This makes it impossible to achieve the desired average crystal grain size and volume ratio of coarse prior austenite in the steel microstructure of the electric resistance welded steel pipe or tube according to the present disclosure. If the rough rolling end temperature is more than 1150 °C, the rolling reduction amount in the austenite non-recrystallization temperature range is insufficient, and austenite in the steel material coarsens and the microstructure of the hot-rolled steel sheet coarsens, causing formation of coarse prior austenite in the subsequent quenching process. This makes it impossible to achieve the desired average crystal grain size and volume ratio of coarse prior austenite in the steel microstructure of the electric resistance welded steel pipe or tube according to the present disclosure. The rough rolling end temperature is more preferably 880 °C or more. The rough rolling end temperature is more preferably 1100 °C or less.

In the present disclosure, the finish rolling start temperature is preferably in the range of 800 °C or more and 950 °C or less. If the finish rolling start temperature is less than 800 °C, the surface temperature of the steel sheet falls to or below the ferrite transformation start temperature during the finish rolling and coarse ferrite forms, causing formation of coarse prior austenite in the subsequent quenching process. This may make it impossible to achieve the desired average crystal grain size and volume ratio of coarse prior austenite in the steel microstructure of the electric resistance welded steel pipe or tube according to the present disclosure. If the finish rolling start temperature is more than 950 °C, the rolling reduction amount in the austenite non-recrystallization temperature range is insufficient, and austenite in the steel material coarsens and the microstructure of the hot-rolled steel sheet coarsens, causing formation of coarse prior austenite in the subsequent quenching process. This may make it impossible to achieve the desired average crystal grain size and volume ratio of coarse prior austenite in the steel microstructure of the electric resistance welded steel pipe or tube according to the present disclosure. The finish rolling start temperature is more preferably 820 °C or more. The finish rolling start temperature is more preferably 930 °C or less.

(Finish rolling end temperature: 750 °C or more and 900 °C or less)

If the finish rolling end temperature is less than 750 °C, the surface temperature of the steel sheet falls to or below the ferrite transformation start temperature during the finish rolling and coarse ferrite forms, causing formation of coarse prior austenite in the subsequent quenching process. This makes it impossible to achieve the desired average crystal grain size and volume ratio of coarse prior austenite in the steel microstructure of the electric resistance welded steel pipe or tube according to the present disclosure. If the finish rolling end temperature is more than 900 °C, the rolling reduction amount in the austenite non-recrystallization temperature range is insufficient, and austenite in the steel material coarsens and the microstructure of the hot-rolled steel sheet coarsens, causing formation of coarse prior austenite in the subsequent quenching process. This makes it impossible to achieve the desired average crystal grain size and volume ratio of coarse prior austenite in the steel microstructure of the electric resistance welded steel pipe or tube according to the present disclosure. The finish rolling end temperature is more preferably 770 °C or more. The finish rolling end temperature is more preferably 880 °C or less.

(Total rolling reduction ratio at 930 °C or less: 50 % or more)

In the production method according to the present disclosure, the subgrains in austenite are refined in the hot rolling process to refine the microstructure of the hot-rolled steel sheet, as a result of which the microstructure of the electric resistance welded steel pipe or tube having the desired average crystal grain size and volume ratio of coarse prior austenite can be obtained. During heating in the quenching process, austenite forms mainly from grain boundaries with large orientation differences. Hence, by refining the microstructure before the quenching process, the area of the crystal grain boundaries that serve as austenite nucleation sites increases, with it being possible to refine austenite formed in the quenching process.
In order to refine the subgrains in austenite in the hot rolling process, it is necessary to increase the rolling reduction ratio in the austenite non-recrystallization temperature range and introduce sufficient processing strain. In order to achieve this, the total rolling reduction ratio at 930 °C or less in the hot rolling process in the production method according to the present disclosure is 50 % or more.
Herein, the "total rolling reduction ratio" refers to the sum of the rolling reduction ratios in the rolling passes in the temperature range of 930 °C or less.
If the total rolling reduction ratio is less than 50 %, sufficient processing strain cannot be introduced in the hot rolling process, as a result of which the microstructure of the electric resistance welded steel pipe or tube having the desired average crystal grain size and volume ratio of coarse prior austenite in the present disclosure cannot be obtained. The total rolling reduction ratio is preferably 55 % or more.
Although no upper limit is placed on the total rolling reduction ratio, if the total rolling reduction ratio is more than 80 %, the effect of improving toughness and workability by increasing the rolling reduction ratio lessens and only the equipment load increases. The total rolling reduction ratio is therefore preferably 80 % or less, and more preferably 70 % or less.

[Cooling process]

In the production method according to the present disclosure, the hot-rolled sheet is subjected to cooling treatment in the cooling process after the hot rolling process. In this cooling process, the hot-rolled sheet is cooled under the conditions that the average cooling rate to the cooling stop temperature at the sheet thickness center of the hot-rolled sheet is 5 °C/s or more and 30 °C/s or less and the cooling stop temperature at the sheet thickness center of the hot-rolled sheet is 400 °C or more and 650 °C or less.

(Average cooling rate from cooling start to cooling stop (cooling end): 5 °C/s or more and 30 °C/s or less)

If the average cooling rate in the temperature range from the cooling start to cooling end (described later) at the sheet thickness center of the hot-rolled sheet is less than 5 °C/s, the frequency of nucleation decreases and the microstructure of the hot-rolled steel sheet coarsens, as a result of which the microstructure of the electric resistance welded steel pipe or tube having the desired average crystal grain size and volume ratio of coarse prior austenite in the present disclosure cannot be obtained. If the average cooling rate is more than 30 °C/s, a large amount of martensite forms and ductility and toughness decrease. This hinders forming in the subsequent pipe or tube formation process.
The average cooling rate is preferably 10 °C/s or more. The average cooling rate is preferably 25 °C/s or less.
In the production method according to the present disclosure, it is preferable to start cooling immediately after the end of finish rolling in order to suppress the formation of ferrite on the surface of the hot-rolled sheet before cooling.

(Cooling stop temperature: 400 °C or more and 650 °C or less)

If the cooling stop temperature at the sheet thickness center of the hot-rolled sheet is less than 400 °C, a large amount of martensite forms and ductility and toughness decrease. This hinders forming in the subsequent pipe or tube formation process. If the cooling stop temperature is more than 650 °C, the frequency of nucleation decreases and the microstructure of the hot-rolled steel sheet coarsens, as a result of which the microstructure of the electric resistance welded steel pipe or tube having the desired average crystal grain size and volume ratio of coarse prior austenite in the present disclosure cannot be obtained. The cooling stop temperature is preferably 430 °C or more. The cooling stop temperature is preferably 620 °C or less.

In the present disclosure, the average cooling rate is a value (cooling rate) calculated as ((the sheet thickness center temperature of the hot-rolled sheet before cooling - the sheet thickness center temperature of the hot-rolled sheet after cooling)/the cooling time).

The cooling method may be, for example, water cooling by spraying water from a nozzle, or cooling by spraying cooling gas. In the production method according to the present disclosure, it is preferable to perform cooling operation (treatment) on both sides of the hot-rolled sheet so that both sides of the hot-rolled sheet will be cooled under the same conditions.

[Coiling process]

After the cooling process, the hot-rolled sheet is coiled and then allowed to naturally cool in the coiling process. If the coiling temperature is less than 400 °C, a large amount of martensite forms and ductility and toughness decrease. This hinders forming in the subsequent pipe or tube formation process. If the coiling temperature is more than 650 °C, the frequency of nucleation decreases and the microstructure of the hot-rolled steel sheet coarsens, as a result of which the microstructure of the electric resistance welded steel pipe or tube having the desired average crystal grain size and volume ratio of coarse prior austenite in the present disclosure cannot be obtained. The coiling temperature is preferably 430 °C or more. The coiling temperature is preferably 620 °C or less. In the present disclosure, the coiled hot-rolled sheet is referred to as "hot-rolled steel sheet".

[Pipe or tube formation process]

After the coiling process, the hot-rolled steel sheet is subjected to pipe or tube formation treatment in the pipe or tube formation process. In the pipe or tube formation process, the hot-rolled steel sheet is, while being continuously delivered, formed into a cylindrical open pipe or tube (round steel pipe or tube) by cold roll forming, and the circumferential butting parts of the open pipe or tube are melted by high-frequency electric resistance heating and electric resistance welded through pressure bonding by upset with squeeze rolls to obtain a steel pipe or tube material.

The amount of upset (hereafter referred to as "upset amount") during the electric resistance welding is preferably 20 % or more of the sheet thickness so that inclusions such as oxides and nitrides which cause a decrease in toughness can be discharged together with molten steel. If the upset amount is more than 100 % of the sheet thickness, an excessively high load is put on the squeeze rolls. The upset amount is therefore preferably 20 % or more and 100 % or less of the sheet thickness. The upset amount is more preferably 40 % or more of the sheet thickness. The upset amount is more preferably 80 % or less of the sheet thickness.

The upset amount is calculated as the difference between the outer circumferential length of the steel pipe or tube (open pipe or tube) before electric resistance welding and the outer circumferential length of the steel pipe or tube after electric resistance welding.

[Sizing process: reducing steel pipe or tube material in diameter so as to reduce circumferential length by 3.0 % or less]

In the sizing process after the pipe or tube formation process, the steel pipe or tube material is reduced in diameter using rolls arranged above, below, left, and right of the steel pipe or tube material, to adjust the outer diameter and roundness to the desired values.

In the sizing process, if diameter reduction is performed so as to reduce the steel pipe or tube circumferential length by more than 3.0 % in total, the dislocation density of each crystal grain varies greatly and strain-induced grain boundary migration occurs in the subsequent quenching process, causing formation of coarse prior austenite. It is therefore important to perform diameter reduction so as to reduce the steel pipe or tube circumferential length by 3.0 % or less. The steel pipe or tube material is preferably reduced in diameter so as to reduce the steel pipe or tube circumferential length by 2.5 % or less. In order to improve the accuracy of the outer diameter and the roundness, the steel pipe or tube material is preferably reduced in diameter so as to reduce the steel pipe or tube circumferential length by 0.5 % or more in total. The steel pipe or tube material is more preferably reduced in diameter so as to reduce the steel pipe or tube circumferential length by 1.0 % or more in total.

[Quenching process: heating steel pipe or tube material in temperature range of 850 °C or more and 1050 °C or less for 100 s or more and 1000 s or less]

If the heating temperature is less than 850 °C or the heating time is less than 100 s in the quenching process, the microstructure is not completely austenitized, so that the desired volume ratio of martensite cannot be achieved. If the heating temperature is more than 1050 °C or the heating time is more than 1000 s in the quenching process, austenite coarsens, so that the desired average crystal grain size and volume ratio of coarse prior austenite in the steel microstructure of the electric resistance welded steel pipe or tube according to the present disclosure cannot be achieved. The heating temperature in the quenching process is preferably 880 °C or more. The heating temperature in the quenching process is preferably 1000 °C or less. The heating time in the quenching process is preferably 200 s or more. The heating time in the quenching process is preferably 800 s or less.

(Average cooling rate at least from 800 °C to 400 °C at wall thickness center: 40 °C/s or more)

In the production method according to the present disclosure, the temperature range for which the average cooling rate in the quenching process is specified is set to at least the temperature range from 800 °C to 400 °C. This is because ferrite, pearlite, and bainite form in this temperature range.
If the average cooling rate at the wall thickness center of the steel pipe or tube material in the quenching process is less than 40 °C/s, the desired martensite fraction cannot be achieved. The average cooling rate is preferably 50 °C/s or more. Although no upper limit is placed on the average cooling rate, if the average cooling rate is more than 150 °C/s, the effect of increasing strength by increasing the cooling rate lessens and only the equipment load increases. The average cooling rate is therefore preferably 150 °C/s or less, and more preferably 130 °C/s or less.
If the wall thickness center temperature after cooling in the quenching process is more than 100 °C, the desired martensite fraction cannot be achieved. It is therefore important that the wall thickness center temperature after cooling in the quenching process in the present disclosure is 100 °C or less. The wall thickness center temperature after cooling in the quenching process is preferably 60 °C or less.

[Tempering process: heating steel pipe or tube material in temperature range of 450 °C or more and 600 °C or less for more than 70 s]

If the heating temperature is less than 450 °C or the heating time is 70 s or less in the tempering process, dislocation recovery is insufficient, so that the desired toughness and workability cannot be achieved. Moreover, mobile dislocation recovery is insufficient and mobile dislocations remain excessively. Consequently, the stress relaxation amount increases and yield stress decreases, and the desired yield stress cannot be achieved. If the heating temperature in the tempering process is more than 600 °C, mobile dislocations recover excessively and accordingly the stress relaxation amount decreases excessively, causing increases in yield stress and yield ratio. This leads to lower workability. The heating temperature in the tempering process is preferably 480 °C or more. The heating temperature in the tempering process is preferably 570 °C or less.
If the heating time in the tempering process is more than 1000 s, mobile dislocations recover excessively and accordingly the stress relaxation amount decreases excessively, causing increases in yield stress and yield ratio. This may lead to lower workability.
The heating time is therefore preferably 1000 s or less, and more preferably 800 s or less. The heating time is preferably 100 s or more, and more preferably 200 s or more.
The cooling method after heating in the tempering process may be any of air cooling, water cooling, and furnace cooling. The cooling conditions are not limited, and the steel pipe or tube material is cooled to room temperature.
The electric resistance welded steel pipe or tube according to the present disclosure is produced through the processes described above. The electric resistance welded steel pipe or tube according to the present disclosure has high strength and excellent workability and toughness.
In the electric resistance welded steel pipe or tube according to the present disclosure, it is preferable that the stress relaxation amount at stress of 40 % of the yield stress is 0.50 % or more and 5.00 % or less of the yield stress.
The stress relaxation amount is a value corresponding to the mobile dislocation density. When the stress relaxation amount is larger, the number of mobile dislocations is larger and plastic deformation is possible with lower stress, so that the yield stress is lower, the yield ratio is lower, and workability is higher.
If the stress relaxation amount at stress of 40 % of the yield stress is less than 0.50 % of the yield stress, the mobile dislocation density is excessively low, and accordingly the yield stress and yield ratio increase, which may make it impossible to achieve the desired workability. If the stress relaxation amount at stress of 40 % of the yield stress is more than 5.00 % of the yield stress, the mobile dislocation density is excessively high, which may make it impossible to achieve the desired yield stress.

Moreover, in the electric resistance welded steel pipe or tube according to the present disclosure, the load P (N) at the time of cracking in a flattening test satisfies the following formula (1).

$$P \geq 1.5 \times TS \times t^2 \times L/D \qquad \dots (1).$$

In the formula (1), TS is the tensile strength (MPa), D is the outer diameter (mm), t is the wall thickness (mm), and L is the length (mm) in the pipe or tube axial direction.

When a pipe or tube is subjected to bending deformation, the pipe or tube cross section deforms from a perfect circle to an ellipse, and buckles on the inside of the bend or fractures on the outside of the bend. Buckling on the inside of the bend occurs early if the elliptical deformation of the pipe or tube cross section is large. Fracture on the outside of the bend occurs early if the yield ratio is high and the elongation is small.

When the load P at the time of cracking in the flattening test is greater, the resistance to elliptical deformation of the pipe or tube cross section is greater and elliptical deformation is less likely to occur. Such an electric resistance welded steel pipe or tube is less likely to buckle on the inside of the bend and has excellent workability.

Preliminary experiments using conventional materials revealed that the load P at the time of cracking in the flattening test is proportional to TS, inversely proportional to D, proportional to the square of t, and proportional to L.

Thus, an electric resistance welded steel pipe or tube that satisfies the formula (1) has even higher workability than conventional materials.

When a section of the electric resistance welded steel pipe or tube according to the present disclosure perpendicular to the pipe or tube axial direction and including the weld portion (electric resistance weld portion) is polished, then etched with an etching solution, and observed with an optical microscope, the width of the bond portion 3 of the weld portion (electric resistance weld portion) in the pipe or tube circumferential direction is 1.0 μm or more and 1000 μm or less over the entire pipe or tube thickness.

The etching solution may be selected appropriately depending on the steel composition and the type of the steel pipe or tube. As illustrated in the schematic diagram of the section after etching in FIG. 1, the bond portion 3 can be visually recognized as a region different in microstructure and contrast from the base metal portion 1 and the heat-affected zone 2 in FIG. 1. For example, the bond portion 3 in electric resistance welded steel pipes or tubes of carbon steel and low-alloy steel can be identified as a region observed as white in the section etched with nital using an optical microscope. The bond portion 3 in UOE steel pipes or tubes of carbon steel and low-alloy steel can be identified as a region containing a cellular or dendritic solidification microstructure in the cross section etched with nital using an optical microscope. In the present disclosure, the weld portion is composed of the bond portion 3 and the heat-affected zone 2.

The electric resistance welded steel pipe or tube according to the present disclosure preferably has a wall thickness of 1.5 mm or more and 20 mm or less. The electric resistance welded steel pipe or tube according to the present disclosure preferably has an outer diameter of 20 mm or more and 250 mm or less.

The conditions of the steel pipe or tube production method other than those described above may be in accordance with conventional methods.

EXAMPLES

The presently disclosed technique will be described in more detail below by way of examples. The present disclosure is not limited to such examples.

Molten steels having the chemical compositions shown in Table 1 were each prepared by steelmaking and formed into a slab. The obtained slab was subjected to a hot rolling process, a cooling process, and a coiling process under the conditions shown in Table 2 to obtain a hot-rolled steel sheet. The same steel pipe or tube number indicates the same test object (example) in all tables.

After the coiling process, the hot-rolled steel sheet was formed into a cylindrical round steel pipe or tube by roll forming, and its butting parts were electric resistance welded. Following this, the round steel pipe or tube was subjected to a sizing process of reducing the diameter by the diameter reduction ratio shown in Table 2 using rolls arranged above, below, left, and right of the round steel pipe or tube, and then subjected to a quenching process and a tempering process under the conditions shown in Table 2 to obtain an electric resistance welded steel pipe or tube with the outer diameter D (mm) and wall thickness t (mm) shown in Table 2.

Various test pieces were collected from each of the electric resistance welded steel pipes or tubes thus obtained, and the following microstructure analysis, tensile test, stress relaxation test, Charpy impact test, and flattening test were conducted. The test pieces for the microstructure analysis, tensile test, stress relaxation test, and Charpy impact test were collected from the base metal portion at a distance of 90° from the electric resistance weld portion in the pipe or tube circumferential direction. The flattening test piece was an annular test piece with a length L of 100 mm in the pipe or tube axial direction.

[Table 1]

Table 1

| Steel pipe or tube | Chemical composition (mass%) | | | | | | | | | | | | | | | |
|---|---|---|---|---|---|---|---|---|---|---|---|---|---|---|---|---|
| | C | Si | Mn | P | S | Al | N | Cu | Ni | Cr | Mo | Nb | V | Ti | Ca | B |
| 1 | 0.322 | 0.08 | 0.44 | 0.012 | 0.0028 | 0.031 | 0.0030 | - | - | 0.36 | - | - | - | 0.024 | 0.0031 | 0.0004 |
| 2 | 0.475 | 0.35 | 1.04 | 0.007 | 0.0006 | 0.029 | 0.0033 | - | - | 0.71 | 0.23 | - | - | 0.059 | 0.0017 | 0.0046 |
| 3 | 0.210 | 0.19 | 0.77 | 0.014 | 0.0011 | 0.035 | 0.0029 | - | - | 0.14 | - | - | - | - | - | 0.0020 |
| 4 | 0.153 | 0.71 | 1.93 | 0.033 | 0.0022 | 0.026 | 0.0041 | 0.38 | 0.29 | 0.29 | - | - | - | 0.142 | 0.0023 | 0.0033 |
| 5 | 0.242 | 0.40 | 1.35 | 0.028 | 0.0019 | 0.045 | 0.0040 | - | - | 0.58 | - | 0.024 | 0.015 | 0.098 | - | 0.0019 |
| 6 | _0.521_ | 0.09 | 0.58 | 0.027 | 0.0038 | 0.040 | 0.0036 | - | - | 0.44 | - | - | - | 0.012 | - | 0.0032 |
| 7 | _0.137_ | 0.33 | 0.45 | 0.017 | 0.0009 | 0.039 | 0.0028 | - | - | 0.25 | - | - | - | 0.036 | - | 0.0017 |
| 8 | 0.345 | _1.02_ | _2.43_ | 0.009 | 0.0003 | 0.023 | 0.0035 | - | - | 0.19 | - | - | - | 0.015 | - | 0.0013 |
| 9 | 0.348 | _0.02_ | _0.09_ | 0.014 | 0.0046 | 0.037 | 0.0031 | - | - | 0.36 | - | - | - | 0.042 | - | 0.0035 |
| 10 | 0.169 | 0.67 | 1.44 | 0.008 | 0.0049 | 0.030 | 0.0026 | - | - | _1.03_ | - | - | - | - | - | 0.0012 |
| 11 | 0.215 | 0.18 | 0.67 | 0.011 | 0.0057 | 0.029 | 0.0032 | - | - | _0.08_ | - | - | - | 0.007 | - | 0.0031 |
| 12 | 0.194 | 0.23 | 0.66 | 0.025 | 0.0014 | 0.022 | 0.0039 | - | - | 0.28 | - | - | - | 0.024 | - | 0.0055 |
| 13 | 0.225 | 0.19 | 0.74 | 0.044 | 0.0032 | 0.040 | 0.0037 | - | - | 0.14 | - | - | - | 0.013 | - | 0.0001 |
| 14 | 0.340 | 0.22 | 0.55 | 0.019 | 0.0027 | 0.041 | 0.0033 | - | - | 0.33 | - | - | - | - | - | 0.0030 |
| 15 | 0.253 | 0.33 | 0.64 | 0.050 | 0.0035 | 0.039 | 0.0025 | - | - | 0.29 | - | - | - | - | - | 0.0028 |
| 16 | 0.192 | 0.41 | 0.86 | 0.022 | 0.0023 | 0.024 | 0.0022 | - | - | 0.15 | - | - | - | 0.031 | - | 0.0019 |
| 17 | 0.192 | 0.41 | 0.86 | 0.022 | 0.0023 | 0.024 | 0.0022 | - | - | 0.15 | - | - | - | 0.031 | - | 0.0019 |
| 18 | 0.192 | 0.41 | 0.86 | 0.022 | 0.0023 | 0.024 | 0.0022 | - | - | 0.15 | - | - | - | 0.031 | - | 0.0019 |
| 19 | 0.216 | 0.15 | 0.43 | 0.025 | 0.0031 | 0.038 | 0.0040 | - | - | 0.17 | - | - | - | - | - | 0.0013 |

Balance of chemical composition other than above consists of Fe and inevitable impurities.
Underlined values are outside the scope of the present disclosure.

[Table 2]

[Table 2]

Table 2

| Steel pipe or tube | Hot rolling process | | | | Cooling process | | Coiling process | Sizing process | Quenching process | | | | Tempering process | | Steel pipe or tube dimensions | |
|---|---|---|---|---|---|---|---|---|---|---|---|---|---|---|---|---|
| | Heating temperature (°C) | Rough rolling end temperature (°C) | Finish rolling end tempera-ture (°C) | Total rolling reduc-tion ratio at 930 °C or less (%) | Average cooling rate * 1 (°C/s) | Cooling stop tempera-ture* 1 (°C) | Coiling tempera-ture (°C) | Diame-ter reduc-tion ratio (%) | Tempera-ture (°C) | Ti-me (s) | Aver-age cooling rate * 2 (°C/s) | Tempera-ture after cooling (°C) | Tempera-ture (°C) | Tim-e (s) | Outer diame-ter D (mm) | Wall thickn-es s t (mm) |
| 1 | 1280 | 1120 | 890 | 57 | 12 | 610 | 590 | 27 | 950 | 300 | 67 | 55 | 510 | 180 | 160 | 120 |
| 2 | 1200 | 910 | 800 | 53 | 29 | 550 | 520 | 0.8 | 1020 | 180 | 43 | 60 | 560 | 300 | 270 | 180 |
| 3 | 1230 | 950 | 840 | 69 | 8 | 440 | 420 | 1.6 | 980 | 150 | 55 | 95 | 470 | 500 | 110 | 5.5 |
| 4 | 1200 | 1080 | 830 | 66 | 17 | 600 | 570 | 1.4 | 870 | 600 | 59 | 25 | 500 | 300 | 50 | 29 |
| 5 | 1120 | 860 | 770 | 64 | 27 | 560 | 530 | 2.0 | 900 | 300 | 71 | 70 | 550 | 600 | 90 | 7.0 |
| 6 | 1200 | 990 | 860 | 63 | 25 | 620 | 590 | 22 | 940 | 240 | 66 | 20 | 530 | 600 | 120 | 4.2 |
| 7 | 1140 | 950 | 850 | 60 | 14 | 620 | 600 | 1.8 | 870 | 300 | 55 | 25 | 500 | 300 | 160 | 100 |
| 8 | 1210 | 1110 | 880 | 67 | 24 | 570 | 540 | 1.5 | 910 | 240 | 48 | 60 | 580 | 500 | 90 | 5.0 |
| 9 | 1170 | 1040 | 840 | 59 | 18 | 500 | 480 | 2.3 | 940 | 400 | 66 | 40 | 570 | 600 | 110 | 8.5 |
| 10 | 1220 | 1070 | 870 | 65 | 11 | 540 | 510 | 1.9 | 990 | 600 | 58 | 80 | 490 | 180 | 160 | 100 |
| 11 | 1200 | 1090 | 860 | 52 | 10 | 610 | 590 | 2.4 | 1030 | 500 | 54 | 40 | 580 | 300 | 50 | 26 |
| 12 | 1200 | 1130 | 810 | 60 | 13 | 590 | 560 | 2.0 | 1000 | 300 | 55 | 30 | 480 | 300 | 110 | 8.5 |
| 13 | 1150 | 960 | 790 | 58 | 16 | 560 | 530 | 1.5 | 890 | 420 | 49 | 35 | 500 | 500 | 160 | 120 |
| 14 | 1200 | 980 | 800 | 54 | <u>4</u> | 610 | 590 | 1.9 | 1030 | 180 | 43 | 50 | 470 | 180 | 160 | 120 |
| 15 | 1190 | 1020 | 770 | <u>43</u> | 19 | 570 | 540 | 2.5 | 1000 | 300 | 51 | 50 | 510 | 240 | 90 | 5.0 |
| 16 | 1260 | 1130 | 880 | 61 | 23 | 480 | 450 | 1.7 | 920 | 500 | 61 | 55 | <u>620</u> | 500 | 90 | 5.0 |
| 17 | 1260 | 1130 | 880 | 61 | 23 | 480 | 450 | 1.7 | 920 | 500 | 61 | 55 | 590 | 120-0 | 90 | 5.0 |

(continued)

| Ste-el pipe or tube | Hot rolling process | | | | Cooling process | | Coiling process | Sizing process | Quenching process | | | | Tempering process | | Steel pipe or tube dimensions | |
|---|---|---|---|---|---|---|---|---|---|---|---|---|---|---|---|---|
| | Heating temperature (°C) | Rough rolling end temperature (°C) | Finish rolling end tempera-ture (°C) | Total rolling reduc-tion ratio at 930 °C or less (%) | Average cooling rate * 1 (°C/s) | Cooling stop tempera-ture* 1 (°C) | Coiling tempera-ture (°C) | Diame-ter reduc-tion ratio (%) | Tempera-ture (°C) | Ti-me (s) | Aver-age cooling rate * 2 (°C/s) | Tempera-ture after cooling (°C) | Tempera-ture (°C) | Tim-e (s) | Outer diame-ter D (mm) | Wall thickn-es s t (mm) |
| 18 | 1260 | 1130 | 880 | 61 | 23 | 480 | 450 | 1.7 | 920 | 500 | 61 | 55 | 480 | 90 | 90 | 5.0 |
| 19 | 1200 | 1080 | 860 | 56 | 22 | 500 | 480 | 2.1 | 880 | 200 | 52 | 40 | 490 | <u>70</u> | 90 | 40 |

Underlined values are outside the scope of the present disclosure.
*1: Value at sheet thickness center.
*2: Average cooling rate at wall thickness center from 800 °C to 400 °C.

[Microstructure observation]

The test piece for microstructure observation was collected so that the observation plane would be a section parallel to both the pipe or tube longitudinal direction and the wall thickness direction and at the wall thickness center, and mirror-polished and then etched with nital.

The microstructure at the wall thickness center was observed and an optical microscope image and a SEM image were captured using an optical microscope (magnification: 1000 times) and a scanning electron microscope (SEM) (magnification: 1000 times). From the obtained optical microscope image and SEM image, the area ratio of each of ferrite, bainite, pearlite, and balance (martensite, austenite) was determined. The area ratio of each microstructure was calculated as the average value of the respective values obtained as a result of observation for five observation fields. The area ratio of each microstructure obtained as a result of the microstructure observation was taken to be the volume ratio of the microstructure.

Since it is difficult to distinguish martensite from austenite in optical microscope images and SEM images, the area ratio of microstructure observed as martensite or austenite in the obtained SEM image was measured, and the volume ratio of austenite measured by the following method was subtracted from the measured area ratio to obtain the volume ratio of martensite.

The volume ratio of austenite was measured by X-ray diffraction using a test piece prepared in the same manner as the test piece for dislocation analysis. For this measurement, Mo K$\alpha$ rays were used to determine the integrated intensities of the (200), (220), and (311) planes of fcc iron and the (200) and (211) planes of bcc iron. Assuming that the normalized integrated intensity obtained by dividing each of the values by the theoretical intensity value is proportional to the volume ratio of the corresponding phase, the proportion of the normalized integrated intensity of austenite was determined to obtain the volume ratio of austenite.

In the measurement of the average crystal grain size, a histogram of grain size distribution (a graph in which the horizontal axis represents grain size and the vertical axis represents the existence ratio at each grain size) was calculated using the SEM/EBSD method, and the arithmetic average of the grain sizes was calculated. Specifically, the orientation differences between adjacent crystal grains were determined, and the boundaries with an orientation difference of 15° or more were defined as crystal grains (crystal grain boundaries). The equivalent circular diameter of each crystal grain was measured, and the average equivalent circular diameter was taken to be the average crystal grain size. The equivalent circular diameter mentioned here is the diameter of a circle with the same area as the corresponding crystal grain.

The measurement conditions were an acceleration voltage of 15 kV, a measurement region of $500\ \mu m \times 500\ \mu m$, and a measurement step size of $0.5\ \mu m$. In the crystal grain size analysis, crystal grains of $2.0\ \mu m$ or less in grain size were excluded as measurement noise, and the obtained area ratio was regarded as being equal to the volume ratio.

[Tensile test]

A JIS 12A tensile test piece was collected so that the tensile direction would be parallel to the pipe or tube longitudinal direction, and the tensile test was conducted in accordance with JIS Z 2241. The yield stress YS (MPa), tensile strength TS (MPa), and total elongation EL (%) were measured, and the yield ratio YR (%) defined as (YS/TS) $\times$ 100 was calculated.

[Stress relaxation test]

A JIS 12A tensile test piece was collected so that the tensile direction would be parallel to the pipe or tube longitudinal direction, and the stress relaxation test was conducted in accordance with JIS Z 2276. The initial stress was set to 40 % of the yield stress obtained in the tensile test. The displacement holding time was 500 s, and the stress decrease amount during the displacement holding time was taken to be the stress relaxation amount.

[Charpy impact test]

V-notch test pieces were each collected from the wall thickness center of the base metal portion in the obtained electric resistance welded steel pipe or tube so that the longitudinal direction of the test piece would be parallel to the pipe or tube axial direction, and the Charpy impact test was conducted at - 60 °C in accordance with JIS Z 2242 to determine absorbed energy.

The number of test pieces in the Charpy impact test was three, and the average value of the obtained impact values was taken to be the Charpy impact value of the base metal portion in the hot-rolled steel sheet and the electric resistance welded steel pipe or tube.

[Flattening test]

An annular test piece with a length L of 100 mm in the pipe or tube axial direction was collected from the obtained electric resistance welded steel pipe or tube, the pipe or tube outer side of the weld portion was polished to give it a metallic luster, and the flattening test was conducted in accordance with the method described in JIS G 3441. The compression speed was 10 mm/min. Compression was stopped when cracking occurred, and the load at this point was taken to be the load P (N) at the time of cracking.

The results of these tests are shown in Table 3.

[Table 4]

Table 3

| Steel pipe or tube | M fraction (%) | Type of balance | Average crystal grain size (μm) | Volume ratio of prior austenite with grain size of 50 μm or more (%) | Mechanical properties | | | | | | | | Remarks |
|---|---|---|---|---|---|---|---|---|---|---|---|---|---|
| | | | | | YS (MPa) | TS (MPa) | YR (%) | Total elongation EL (%) | (Stress relaxation amount/YS) ×100 (%) | Charpy absorbed energy at -60 °C (J/cm²) | 1.5×TS× t²×L/D (kN) | P (kN) | |
| 1 | 100 | - | 48 | 22 | 818 | 912 | 89.7 | 25 | 3.40 | 77 | 123 | 146 | Example |
| 2 | 98 | F | 8.3 | 19 | 692 | 829 | 83.5 | 28 | 4.60 | 135 | 149 | 152 | Example |
| 3 | 100 | - | 6.9 | 30 | 890 | 1015 | 87.7 | 21 | 2.20 | 64 | 42 | 53 | Example |
| 4 | 96 | A | 5.7 | 33 | 759 | 893 | 85.0 | 23 | 0.81 | 108 | 23 | 39 | Example |
| 5 | 94 | F | 6.0 | 27 | 722 | 856 | 84.3 | 26 | 3.30 | 149 | 70 | 78 | Example |
| 6 | 100 | - | 46 | 34 | 1175 | 1247 | 942 | 14 | 1.40 | 33 | 27 | 24 | Comparative Example |
| 7 | 84 | F | 7.9 | 21 | 636 | 751 | 847 | 26 | 2.90 | 118 | 70 | 88 | Comparative Example |
| 8 | 94 | A | 6.1 | 22 | 1117 | 1196 | 93.4 | 13 | 1.90 | 13 | 50 | 44 | Comparative Example |
| 9 | 86 | F, P | 7.7 | 35 | 621 | 730 | 85.1 | 25 | 3.70 | 96 | 72 | 81 | Comparative Example |
| 10 | 97 | F | 8.4 | 37 | 1090 | 1152 | 94.6 | 15 | 3.90 | 40 | 108 | 96 | Comparative Example |
| 11 | 82 | F, P | 8.0 | 36 | 643 | 769 | 83.6 | 22 | 2.50 | 121 | 16 | 22 | Comparative Example |
| 12 | 100 | - | 4.2 | 28 | 1123 | 1187 | 94.6 | 13 | 480 | 57 | 117 | 109 | Comparative Example |
| 13 | 83 | F, P | 6.9 | 31 | 612 | 742 | 825 | 27 | 3.70 | 89 | 100 | 117 | Comparative Example |

EP 4 484 597 A1

| Steel pipe or tube | M fraction (%) | Type of balance | Average crystal grain size ($\mu$m) | Volume ratio of prior austenite with grain size of 50 $\mu$m or more (%) | Mechanical properties | | | | | | | | Remarks |
| --- | --- | --- | --- | --- | --- | --- | --- | --- | --- | --- | --- | --- | --- |
| | | | | | YS (MPa) | TS (MPa) | YR (%) | Total elongation EL (%) | (Stress relaxation amount/YS) ×100 (%) | Charpy absorbed energy at -60 °C (J/cm$^2$) | 1.5×T-S× t$^2$×L/D (kN) | P (kN) | |
| 14 | 99 | F | <u>10.2</u> | 39 | 855 | 925 | 92.4 | 19 | 2.90 | 26 | 125 | 128 | Comparative Example |
| 15 | 98 | F | 9.2 | <u>46</u> | 1007 | 1076 | 93.6 | 16 | 0.97 | 31 | 45 | 41 | Comparative Example |
| 16 | 99 | F | 5.3 | 26 | 876 | 938 | 93.4 | 24 | 0.46 | 112 | 39 | 44 | Comparative Example |
| 17 | 98 | F | 5.3 | 24 | 855 | 928 | 92.1 | 24 | 0.47 | 108 | 39 | 45 | Example |
| 18 | 99 | F | 5.4 | 23 | 844 | 962 | 87.7 | 21 | 5.20 | 104 | 40 | 43 | Example |
| 19 | 96 | F | 6.1 | 34 | 641 | 784 | 81.8 | 27 | 5.30 | 113 | 21 | 34 | Comparative Example |

Underlined values are outside the scope of the present disclosure.
M: martensite, F: ferrite, P: pearlite, A: austenite

EP 4 484 597 A1

In Table 3, Nos. 1 to 5, 17, and 18 are Examples according to the present disclosure, and Nos. 6 to 16 and 19 are Comparative Examples.

In the steel microstructure at the wall thickness center of the base metal portion in the electric resistance welded steel pipe or tube of each Example, the volume ratio of martensite was 90 % or more, the average crystal grain size was 10 μm or less, and the volume ratio of prior austenite with a grain size of 50 μm or more was 40 % or less.

Regarding the mechanical properties of the electric resistance welded steel pipe or tube of each Example, the yield stress was 650 MPa or more, the tensile strength was 780 MPa or more, the yield ratio was 93 % or less, the total elongation was 20 % or more, the Charpy impact value at -60 °C was 60 J/cm$^2$ or more, and the load P (N) at the time of cracking in the flattening test satisfied the foregoing formula (1).

In steel pipe or tube No. 6 of Comparative Example, since the C content was high, the yield ratio, total elongation, Charpy absorbed energy at -60 °C, and load P at the time of cracking in the flattening test were not the desired values.

In steel pipe or tube No. 7 of Comparative Example, since the C content was low, the volume ratio of martensite was below the range according to the present disclosure and the yield stress and tensile strength were not the desired values.

In steel pipe or tube No. 8 of Comparative Example, since the Si and Mn contents were high, the yield ratio, total elongation, Charpy absorbed energy at -60 °C, and load P at the time of cracking in the flattening test were not the desired values.

In steel pipe or tube No. 9 of Comparative Example, since the Si and Mn contents were low, the volume ratio of martensite was below the range according to the present disclosure and the yield stress and tensile strength were not the desired values.

In steel pipe or tube No. 10 of Comparative Example, since the Cr content was high, the yield ratio, total elongation, Charpy absorbed energy at -60 °C, and load P at the time of cracking in the flattening test were not the desired values.

In steel pipe or tube No. 11 of Comparative Example, since the Cr content was low, the volume ratio of martensite was below the range according to the present disclosure and the yield stress and tensile strength were not the desired values.

In steel pipe or tube No. 12 of Comparative Example, since the B content was high, the yield ratio, total elongation, Charpy absorbed energy at -60 °C, and load P at the time of cracking in the flattening test were not the desired values.

In steel pipe or tube No. 13 of Comparative Example, since the B content was low, the volume ratio of martensite was below the range according to the present disclosure and the yield stress and tensile strength were not the desired values.

In steel pipe or tube No. 14 of Comparative Example, since the average cooling rate in the cooling process was low, the average crystal grain size exceeded the range according to the present disclosure and the total elongation and Charpy absorbed energy at -60 °C were not the desired values.

In steel pipe or tube No. 15 of Comparative Example, since the total rolling reduction ratio at 930 °C or less in the hot rolling process was low, the volume ratio of prior austenite with a grain size of 50 μm or more exceeded the range according to the present disclosure and the yield ratio, total elongation, Charpy absorbed energy at -60 °C, and load P at the time of cracking in the flattening test were not the desired values.

In steel pipe or tube No. 16 of Comparative Example, since the temperature in the tempering process was high, the stress relaxation amount was small and the yield ratio was not the desired value.

In steel pipe or tube No. 19 of Comparative Example, since the time in the tempering process was short, the stress relaxation amount was large and the yield stress was not the desired value.

REFERENCE SIGNS LIST

1    base metal portion
2    heat-affected zone (weld portion)
3    bond portion (weld portion)

**Claims**

**1.** An electric resistance welded steel pipe or tube comprising a base metal portion and a weld portion,

wherein a chemical composition contains, in mass%,

C: 0.150 % or more and 0.500 % or less,

Si: 0.05 % or more and 1.00 % or less,
Mn: 0.10 % or more and 2.00 % or less,
P: 0.050 % or less,
S: 0.0200 % or less,
Al: 0.005 % or more and 0.100 % or less,
N: 0.0100 % or less,
Cr: 0.10 % or more and 1.00 % or less, and
B: 0.0002 % or more and 0.0050 % or less,
with a balance consisting of Fe and inevitable impurities, and

wherein a steel microstructure at a wall thickness center of the base metal portion has:

a volume ratio of martensite of 90 % or more, with a balance containing one or more selected from ferrite, bainite, pearlite, and austenite,
an average crystal grain size of 10 μm or less, and
a volume ratio of prior austenite with a grain size of 50 μm or more of 40 % or less.

2. The electric resistance welded steel pipe or tube according to claim 1,

wherein the chemical composition further contains, in mass%, one or more selected from
Cu: 1.00 % or less,
Ni: 1.00 % or less,
Mo: 1.00 % or less,
Nb: 0.150 % or less,
V: 0.150 % or less,
Ti: 0.150 % or less, and
Ca: 0.0100 % or less.

3. The electric resistance welded steel pipe or tube according to claim 1,

wherein, in the chemical composition contains, in mass%,
P: 0.002 % or more and 0.050 % or less,
S: 0.0002 % or more and 0.0200 % or less, and
N: 0.0010 % or more and 0.0100 % or less.

4. A production method for the electric resistance welded steel pipe or tube according to any one of claims 1 to 3, the production method comprising:

a hot rolling process of heating a steel material to a heating temperature of 1100 °C or more and 1300 °C or less, and thereafter subjecting the steel material to hot rolling with a rough rolling end temperature of 850 °C or more and 1150 °C or less, a finish rolling end temperature of 750 °C or more and 900 °C or less, and a total rolling reduction ratio at 930 °C or less of 50 % or more;
a cooling process of, after the hot rolling process, performing cooling with an average cooling rate of 5 °C/s or more and 30 °C/s or less at a sheet thickness center and a cooling stop temperature of 400 °C or more and 650 °C or less at a sheet thickness center;
a coiling process of, after the cooling process, performing coiling at 400 °C or more and 650 °C or less to obtain a hot-rolled steel sheet;
a pipe or tube formation process of forming the hot-rolled steel sheet into a cylinder by cold roll forming and performing electric resistance welding to obtain a steel pipe or tube material;
a sizing process of reducing the steel pipe or tube material in diameter so as to reduce a circumferential length thereof by 3.0 % or less;
a quenching process of, after the sizing process, heating the steel pipe or tube material in a temperature range of 850 °C or more and 1050 °C or less for 100 s or more and 1000 s or less, and thereafter cooling the steel pipe or tube material to 100 °C or less with an average cooling rate of 40 °C/s or more at least from 800 °C to 400 °C at a wall thickness center; and
a tempering process of, after the quenching process, heating the steel pipe or tube material in a temperature range of 450 °C or more and 600 °C or less for more than 70 s.

**5.** The production method according to claim 4,
wherein a heating time in the temperature range of 450 °C or more and 600 °C or less in the tempering process is 100 s or more and 1000 s or less.

# FIG. 1

<div align="center">

**INTERNATIONAL SEARCH REPORT**

</div>

| | International application No. |
|---|---|
| | **PCT/JP2022/041580** |

**A.  CLASSIFICATION OF SUBJECT MATTER**

*C22C 38/00*(2006.01)i; *B21C 37/08*(2006.01)i; *C21D 8/02*(2006.01)i; *C21D 9/08*(2006.01)i; *C21D 9/46*(2006.01)i; *C21D 9/50*(2006.01)i; *C22C 38/38*(2006.01)i; *C22C 38/58*(2006.01)i

FI:  C22C38/00 301Z; C22C38/38; C22C38/58; C22C38/00 301B; C22C38/00 301W; C21D8/02 B; C21D9/46 S; C21D9/08 F; C21D9/50 101A; B21C37/08 A

According to International Patent Classification (IPC) or to both national classification and IPC

**B.  FIELDS SEARCHED**

Minimum documentation searched (classification system followed by classification symbols)

C22C38/00-38/60; C21D8/02; C21D9/46; C21D9/08; C21D9/50; B21C37/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2010-70789 A (NIPPON STEEL CORP) 02 April 2010 (2010-04-02)<br>claims | 1-5 |
| A | JP 2007-154289 A (NIPPON STEEL CORP) 21 June 2007 (2007-06-21)<br>claims, paragraphs [0018], [0023]-[0027] | 1-5 |
| A | JP 2007-262469 A (JFE STEEL KK) 11 October 2007 (2007-10-11)<br>claims, paragraphs [0064]-[0071] | 1-5 |
| A | JP 2003-328082 A (NIPPON STEEL CORP) 19 November 2003 (2003-11-19)<br>claims, table 1 | 1-5 |
| A | WO 2017/056384 A1 (JFE STEEL KK) 06 April 2017 (2017-04-06)<br>claims | 1-5 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | |
| "O" | document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" document member of the same patent family |

| Date of the actual completion of the international search | Date of mailing of the international search report |
|---|---|
| **18 January 2023** | **31 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/041580**

| Patent document cited in search report | | | Publication date (day/month/year) | Patent family member(s) | | | Publication date (day/month/year) |
|---|---|---|---|---|---|---|---|
| JP | 2010-70789 | A | 02 April 2010 | (Family: none) | | | |
| JP | 2007-154289 | A | 21 June 2007 | (Family: none) | | | |
| JP | 2007-262469 | A | 11 October 2007 | (Family: none) | | | |
| JP | 2003-328082 | A | 19 November 2003 | US claims, table 3 CN | 2005/0034795 1509922 | A1 A | |
| WO | 2017/056384 | A1 | 06 April 2017 | EP claims US CN | 3358028 2018/0305780 108138279 | A1 A1 A | |

Form PCT/ISA/210 (patent family annex) (January 2015)

**EP 4 484 597 A1**

**Patent documents cited in the description**

- JP 2019112705 A
- WO 2020075297 A1